# EUROPÄISCHE PATENTANMELDUNG

(11) **EP 4 057 170 A1**
(43) Veröffentlichungstag der Anmeldung: **14.09.2022**
(21) Anmeldenummer: 21161908.5
(22) Anmeldetag: 11.03.2021
(51) Int. Cl.: G06F 21/57, G06F 21/64, G06F 21/52

(54) **VERFAHREN ZUR BESTIMMUNG DER INTEGRITÄT EINER DATENVERARBEITUNG, VORRICHTUNG, DATENVERARBEITUNGSANLAGE UND ANLAGE**

(71) Anmelder: Siemens Aktiengesellschaft, 80333 München (DE)
(72) Erfinder: Aschauer, Hans, 81829 München (DE); Belhachemi, Omar, 80639 München (DE); Falk, Rainer, 85586 Poing (DE); Feist, Christian Peter, 80689 München (DE); Seuschek, Hermann, 81373 München (DE); Zeschg, Thomas, 81543 München (DE)

(57) **Zusammenfassung**

Bei dem Verfahren zur Bestimmung der Integrität einer Datenverarbeitung operativer Daten mittels einer vertrauenswürdigen Ausführungsumgebung werden der vertrauenswürdigen Ausführungsumgebung Eingangsdaten übergeben, die die operativen Daten sowie Testdaten aufweisen, wobei die Eingangsdaten mittels der Datenverarbeitung zu Ausgangsdaten verarbeitet werden und wobei derjenige Teil der Ausgangsdaten, den die verarbeiteten Testdaten bilden, mit Referenzdaten einem Vergleich unterzogen wird und abhängig von dem Vergleich die Integrität der Datenverarbeitung bestimmt wird.

Die Vorrichtung ist insbesondere Computerprogrammprodukt und ausgebildet, ein solches Verfahren auszuführen.

Die Datenverarbeitungsanlage weist eine solche Vorrichtung auf.

Die Anlage ist insbesondere eine Fertigungs- und/oder Bearbeitungsanlage und weist eine solche Vorrichtung auf.

## Beschreibung

Die Erfindung betrifft ein Verfahren zur Bestimmung der Integrität einer Datenverarbeitung operativer Daten mittels einer vertrauenswürdigen Ausführungsumgebung, sowie eine Vorrichtung, eine Datenverarbeitungsanlage und eine Anlage.

Confidential Computing, insbesondere mittels vertrauenswürdiger Ausführungsumgebungen (engl.: *"Trusted Execution Environment"),* die auch Enklaven genannt werden, ermöglicht die Datenverarbeitung sensibler Daten in verschlüsselter Form. Mittels Confidential Computings liegen die zu verarbeitenden Daten selbst während der Datenverarbeitung nicht im Klartext auf einer Plattform, insbesondere in einem Hauptspeicher (RAM), vor. Somit wird mittels Confidential Computing die Vertraulichkeit der zu verarbeitenden Daten auch während der eigentlichen Datenverarbeitung aufrechterhalten.

In solchen vertrauenswürdigen Ausführungsumgebungen werden zwar die Daten bei ihrer Datenverarbeitung geschützt. Es besteht allerdings auch keine oder nur eine sehr eingeschränkte Möglichkeit, die Richtigkeit, d. h. die Integrität, der Datenverarbeitung innerhalb einer solchen vertrauenswürdigen Ausführungsumgebung zu überwachen und zu überprüfen:
Bei eingebetteten Systemen, insbesondere bei Safetykritischen Systemen, sind Watchdogs bekannt, die die Hardware der eingebetteten Systeme im laufenden Betrieb überwachen und im Fehlerfall einen Neustart zu erzwingen. Zudem sind Seitenkanalangriffe, speziell auf Implementierungen von Crypto-Algorithmen, bekannt. Es ist ein Power Fingerprinting bekannt, um ein Gerät anhand dessen elektromagnetischer Abstrahlung oder Stromverbrauchprofils zu überwachen (https://www.pfpcyber.com/how-it-works/).

Es ist, etwa bei Intel SGX als vertrauenswürdiger Ausführungsumgebung, bekannt, dass die vertrauenswürdige Ausführungsumgebung gegenüber einem externen System oder einer anderen Enklave mitteilt, welche Applikation, auch als Anwendung oder App bezeichnet, in der vertrauenswürdigen Ausführungsumgebung ausgeführt wird. Dabei wird jedoch nicht geprüft, ob eine vertrauenswürdige Ausführungsumgebung die Datenverarbeitung so ausführt wie erwartet, d. h. die Integrität der Datenverarbeitung wird nicht geprüft. Es besteht daher nach wie vor ein Bedarf, die Integrität einer vertrauenswürdigen Ausführungsumgebung besser zu bestimmen.

Bislang bekannte vertrauenswürdige Ausführungsumgebungen können also zwar die Vertraulichkeit der Datenverarbeitung schützen, sodass auch sensible Daten, etwa vertrauliche Daten, die wie Patientendaten insbesondere Datenschutzanforderungen genügen müssen, und/oder Konstruktionsdaten und/oder Betriebsdaten einer Fertigung, verarbeitet werden können, ohne deren Vertraulichkeit zu gefährden. Jedoch kann die Integrität der Datenverarbeitung bei bislang bekannten vertrauenswürdigen Ausführungsumgebungen nicht gewährleistet werden, sodass nicht bekannt ist, ob Ausgangsdaten bei der Datenverarbeitung korrekt ermittelt wurden. D. h. eine korrekt funktionierende technische Realisation der vertrauenwürdigen Ausführungsumgebung und darauf korrekt ausgeführter Programmcode ist nicht sichergestellt.

Es ist daher eine Aufgabe der Erfindung, ein gegenüber dem Stand der Technik verbessertes Verfahren zur Bestimmung der Integrität einer Datenverarbeitung operativer Daten mittels einer vertrauenswürdigen Ausführungsumgebung anzugeben. Ferner ist es Aufgabe der Erfindung, eine verbesserte Vorrichtung zur Bestimmung einer Datenverarbeitung operativer Daten mittels einer vertrauenswürdigen Datenverarbeitung, sowie eine vertrauenswürdigere Datenverarbeitungsanlage und eine vertrauenswürdigere Anlage zu schaffen.

Diese Aufgaben der Erfindung werden mit einem Verfahren mit den in Anspruch 1 angegebenen Merkmalen und mit einer Vorrichtung mit den in Anspruch 8 angegebenen Merkmalen sowie mit einer Datenverarbeitungsanlage mit den in Anspruch 9 angegebenen Merkmalen und mit einer Anlage mit den in Anspruch 10 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem Verfahren zur Integritätsbestimmung einer Datenverarbeitung operativer Daten mittels einer vertrauenswürdigen Ausführungsumgebung werden der vertrauenswürdigen Ausführungsumgebung Eingangsdaten übergeben, die die operativen Daten und Testdaten aufweisen, wobei die Eingangsdaten mittels der Datenverarbeitung zu Ausgangsdaten verarbeitet werden und wobei derjenige Teil der Ausgangsdaten, den die verarbeiteten Testdaten bilden, einem Vergleich mit Referenzdaten unterzogen wird und abhängig von dem Vergleich die Integrität der Datenverarbeitung bestimmt wird.

Vertrauenswürdige Ausführungsumgebungen im Sinne dieser Erfindung sind insbesondere isolierte Ausführungsumgebungen, die vorzugsweise mindestens einen Intel-SGX-Prozessor und/oder mindestens einen ARM-Prozessor und/oder mindestens einen TrustZone-Prozessor und/oder mindestens einen AMD-Prozessor und/oder mindestens einen RISC-V-Prozessor umfassen. Eine vertrauenswürdige Ausführungsumgebung ist vorzugsweise eine auf einem Prozessor logisch separierte, d.h. von einer regulären Ausführungsumgebung isolierte, Ausführungsumgebung. Sie kann logisch, vorzugsweise jedoch Hardwarebasiert, isoliert sein. Sie kann jedoch ebenso als eigenständige Hardwareeinheit, beispielsweise als separater Prozessor-Core, auf einem Prozessor realisiert sein. Vorzugsweise implementiert die vertrauenswürdige Ausführungsumgebung eine Speicherverschlüsselung, vorzugsweise AMD SME/SEV und/oder Intel TME/MKTME und/oder eine homomorphe Speicherverschlüsselung. Die vertrauenswürdige Ausführungsumgebung kann eine vertrauliche Ausführungsumgebung (engl. "confidential computing environment") sein, bei der während der Verarbeitung von Daten die Daten in kryptographisch verschlüsselter oder in einer obfuszierten Form vorliegen, sodass sie nicht im Klartext in einem Arbeitsspeicher vorliegen. Besonders bevorzugt handelt es sich bei der vertraulichen Ausführungsumgebung um eine solche Ausführungsumgebung, welche auch als (engl.) "Trusted Execution Environment" bezeichnet wird.

Als Eingangsdaten werden bei dem erfindungsgemäßen Verfahren folglich nicht die eigentlichen operativen Daten allein verwendet, sondern die operativen Daten werden um die Testdaten angereichert. Die Testdaten werden mit den operativen Daten zusammengeführt und vorzugsweise "verwoben", um die Eingabedaten für die vertrauenswürdige Ausführungsumgebung zu bilden. Die von der vertrauenswürdigen Ausführungsumgebung ausgegebenen Ausgangsdaten werden nachfolgend separiert, um einen Datenstrom von verarbeiteten Testdaten und einen weiteren Datenstrom von verarbeiteten operativen Daten zu bilden. Die verarbeiteten Testdaten werden anhand von Referenzdaten einer Prüfung unterzogen. Ergibt die Prüfung, dass die Datenverarbeitung der Testdaten integer ist, so wird die Datenverarbeitung der operativen Daten als integer angesehen.

Vorzugsweise wird bei dem erfindungsgemäßen Verfahren dann, wenn die Referenzdaten mit den verarbeiteten Testdaten übereinstimmen, die Integrität der Datenverarbeitung festgestellt und die Integrität wird vorzugsweise mittels einer Nutzerschnittstelle angezeigt. Zweckmäßig kann eine digitale Bestimmung der Integrität, d. h. integer oder nicht integer, vorgesehen sein. Alternativ oder zusätzlich und ebenfalls zweckmäßig kann ein Grad der Integrität bestimmt und vorzugsweise angezeigt werden, also eine Integrität oberhalb eines festgelegten Schwellwerts oder eine Integrität, die eine bestimmte Wahrscheinlichkeit auf vollständige Integrität angibt.

Bei dem Verfahren gemäß der Erfindung kann die Datenverarbeitung unverschlüsselt erfolgen. Bevorzugt erfolgt bei dem Verfahren gemäß der Erfindung die Datenverarbeitung verschlüsselt. Unter einer verschlüsselten Datenverarbeitung ist vorzugsweise eine Datenverarbeitung zu verstehen, bei welcher die mittels der Datenverarbeitung zu verarbeitenden Daten in einem Speicher, wie insbesondere einem Hauptspeicher oder RAM, während der Datenverarbeitung verschlüsselt vorliegen. In beiden vorgenannten Weiterbildungen der Erfindung lässt sich das Verfahren zur Integritätsbestimmung mit den hier beschriebenen Vorteilen einsetzen.

Bei dem erfindungsgemäßen Verfahren werden die operativen Daten und die Testdaten bevorzugt nach einer vorgegebenen Abfolge oder Ordnung zu Eingangsdaten zusammengefügt. Zweckmäßig können die Testdaten nach einer zeitlichen Abfolge oder Ordnung oder nach einer Abfolge oder Ordnung, die sich nach Datenmengen bemisst, vorgegeben sein. Entsprechend lassen sich die verarbeiteten Testdaten in dem Strom der Ausgabedaten nach der zeitlichen Abfolge oder nach der nach Datenmengen bemessenen Ordnung leicht identifizieren.

Alternativ und ebenfalls bevorzugt werden bei dem erfindungsgemäßen Verfahren die operativen Daten und die Testdaten zufällig und/oder pseudozufällig zu einer Abfolge oder Ordnung zu Eingangsdaten zusammengefügt. Zweckmäßig wird die zufällige und/oder pseudozufällige Abfolge oder Ordnung buchgehalten, damit anhand der Abfolge oder Ordnung die verarbeiteten Testdaten aus dem Strom der Ausgangsdaten leicht identifziert werden können.

Bei den beiden vorhergehenden Weiterbildungen der Erfindung werden die verarbeiteten Testdaten vorzugsweise anhand der Abfolge oder Ordnung aus den Ausgangsdaten extrahiert. Anhand der Abfolge oder Ordnung können die Testdaten aus dem Strom der Ausgangsdaten leicht identifiziert werden. Vorzugsweise wird die Abfolge oder Ordnung in einem Arbeitsspeicher gehalten oder zwischengespeichert und es wird die Abfolge oder Ordnung herangezogen, um denjenigen Teil der Ausgangsdaten, den die verarbeiteten Testdaten bilden, zu identifizieren.

In einer vorteilhaften Weiterbildung des erfindungsgemäßen Verfahrens bilden die Testdaten einen Teil der Eingangsdaten, welcher der Datenverarbeitung mittels der vertrauenswürdigen Ausführungsumgebung nicht bedarf. Auf diese Weise müssen die Testdaten nicht eigens den operativen Daten zur Generierung von Eingangsdaten für die vertrauenswürdige Ausführungsumgebung hinzugefügt werden, sondern es können die operativen Daten wie vorgesehen herangezogen werden. In dieser Weiterbildung der Erfindung wird stattdessen ein Teil der ursprünglich operativen Daten zu Testdaten erklärt. Die verbleibenden operativen Daten, welche keine Testdaten bilden, bilden nun neue operative Daten im Sinne der vorliegenden Erfindung. Zweckmäßig werden die Testdaten nicht allein innerhalb der vertrauenswürdigen Ausführungsumgebung verarbeitet, sondern die Testdaten werden zugleich außerhalb der vertrauenswürdigen Ausführungsumgebung verarbeitet, um Referenzdaten für den Vergleich zu erhalten. Diese Weiterbildung der Erfindung ist insbesondere dann vorteilhaft, wenn es aufgrund des Wesens der operativen Daten unkritisch ist, wenn eine Teilmenge davon außerhalb der vertrauenswürdigen Ausführungsumgebung als Testdaten verarbeitet wird.

Die erfindungsgemäße Vorrichtung ist insbesondere ein Computerprogrammprodukt, und sie ist vorzugsweise ausgebildet, ein erfindungsgemäßes Verfahren wie vorhergehend beschrieben auszuführen. Die erfindungsgemäße Vorrichtung weist vorzugsweise einen Testdatengenerator auf, welcher zur Bildung von Testdaten ausgebildet und eingerichtet ist. Ferner weist die erfindungsgemäße Vorrichtung vorzugsweise eine Testdaten-Mischeinheit auf, die ausgebildet ist, die Testdaten mit denoperativen Daten zusammenzufügen. Bevorzugt weist die Vorrichtung eine Testdaten-Trenneinheit auf, die ausgebildet und eingerichtet ist, die verarbeiteten Testdaten von den verarbeiteten operativen Daten zu trennen, sodass ein Datenstrom von verarbeiteten Testdaten und ein weiterer Datenstrom von verarbeiteten operativen Daten gebildet werden kann. Die Vorrichtung weist vorzugsweise eine Testdatenüberprüfungseinheit auf, die ausgebildet und eingerichtet ist, die verarbeiteten Testdaten anhand von Referenzdaten zu überprüfen, d. h. die Testdaten einem Vergleich mit den Referenzdaten zu unterziehen. Besonders bevorzugt weist die Vorrichtung eine Ausgabedaten-Schaltvorrichtung auf, die bei mit den Referenzdaten übereinstimmenden verarbeiteten Testdaten die Ausgangsdaten freischaltet, sodass integer verarbeitete operative Daten ausgegeben werden können. Die Ausgabedaten-Schaltvorrichtung ist vorzugsweise derart ausgebildet, dass sie die Ausgangsdaten dann nicht freischaltet, wenn die verarbeiteten Testdaten nicht oder nicht in hinreichendem Maß mit den Referenzdaten übereinstimmen. Zweckmäßig werden die Ausgabedaten in diesem Falle aufgrund der fehlenden Freischaltung von der Vorrichtung nicht ausgegeben.

Testdatengenerator und/oder Testdaten-Mischeinheit und/oder Testdaten-Trenneinheit und/oder Testdatenüberprüfungseinheit und/oder Ausgabedaten-Schaltvorrichtung können jeweils bevorzugt als Softwarebestandteil und/oder Softwaremodul und/oder als Hardwareeinrichtung realisiert sein.

Die erfindungsgemäße Datenverarbeitungsanlage weist eine erfindungsgemäße Vorrichtung wie vorhergehend beschrieben auf.

Die erfindungsgemäße Anlage ist insbesondere eine Fertigungs- und/oder Bearbeitungsanlage und/oder ein autonomes Fahrzeug und/oder ein Medizingerät, vorzugsweise ein Modalitätsgerät, d. h. ein Medizingerät, das für bildgebende Verfahren eingerichtet und ausgebildet ist, und weist eine erfindungsgemäße Datenverarbeitungsanlage wie vorhergehend beschrieben und/oder eine erfindungsgemäße Vorrichtung wie vorhergehend beschrieben auf.

Nachfolgend wird die Erfindung anhand in der Zeichnung dargestellter Ausführungsbeispiele näher erläutert.

Die einzige Zeichnungsfigur 1 zeigt eine Vorrichtung zur Bestimmung der Integrität einer Datenverarbeitung operativer Daten mittels einer vertrauenswürdigen Ausführungsumgebung, mit welcher das erfindungsgemäße Verfahren zur Bestimmung der Integrität der Datenverarbeitung ausgeführt wird, schematisch in einer Prinzipskizze.

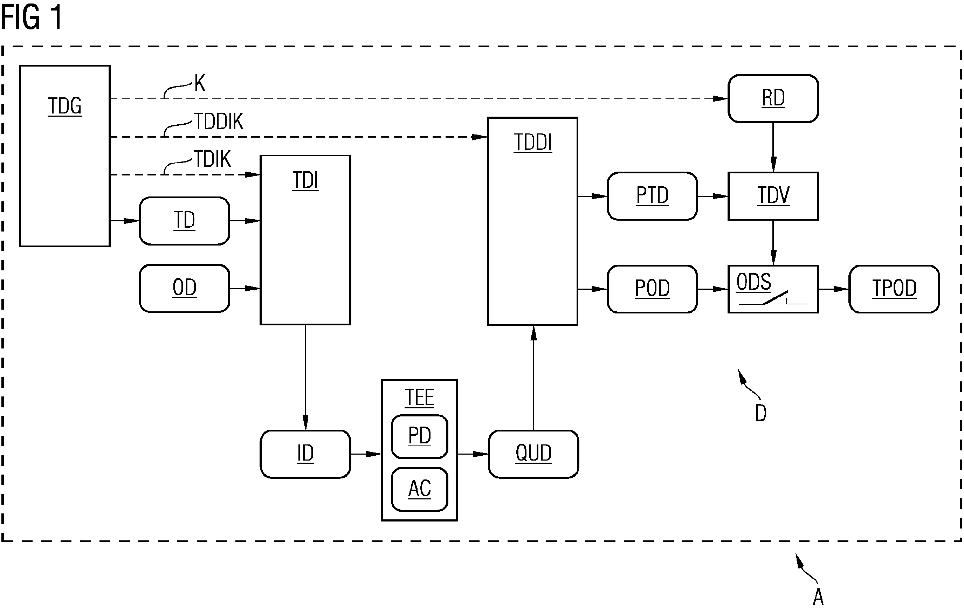

Mittels des anhand von Fig. 1 erläuterten Verfahrens wird ein Runtime-Test, d. h. ein Laufzeittest, zur Bestimmung der Integrität der Datenverarbeitung einer vertrauenswürdigen Ausführungsumgebung TEE durchgeführt. Das Verfahren wird mit einer in Fig. 1 dargestellten Datenverarbeitungsanlage D ausgeführt, die die vertrauenswürdige Ausführungsumgebung TEE aufweist. Die dargestellte vertrauenswürdige Ausführungsumgebung TEE ist auch als Trusted Execution Environment oder Enklave oder Confidential-Computing-Ausführungseinheit bekannt. In der vertrauenswürdigen Ausführungsumgebung TEE wird ein Programmcode AC, hier in Gestalt einer Anwendung, d. h. einer App, ausgeführt. In weiteren, nicht eigens dargestellten Ausführungsbeispielen kann anstelle einer App ein Programmcode in Gestalt eines Containers oder eines Enklaven-Codes vorliegen. Der Programmcode AC der vertrauenswürdigen Ausführungsumgebung TEE verarbeitet einen Strom von Eingangsdaten ID und gibt die verarbeiteten Eingangsdaten PD als Strom von Ausgangsdaten OUD aus.

Die Eingangsdaten ID enthalten operative Daten OD, welche notwendig mittels des Programmcodes AC der vertrauenswürdigen Ausführungsumgebung TEE verarbeitet werden müssen. Die Übertragung der Eingangsdaten ID an die vertrauenswürdige Ausführungsumgebung TEE kann beispielsweise im Klartext erfolgen. In anderen, nicht eigens dargestellten Ausführungsbeispielen erfolgt die Übertragung der Eingangsdaten ID an die vertrauenswürdige Ausführungsumgebung TEE kryptographisch geschützt und authentisiert mittels eines gesicherten Kommunikationskanals, beispielsweise mittels eines TLS-Kanals mit Attestierung der TEE-Ausführungsumgebung und des darin ausgeführten Programmcodes AC.

Die vertrauenswürdige Ausführungsumgebung TEE kann in weiteren, nicht eigens dargestellten Ausführungsbeispielen, welche im Übrigen dem dargestellten Ausführungsbeispiel entsprechen, eine Attestierung bereitstellen, die die Architektur der vertrauenswürdigen Ausführungsumgebung, zweckmäßigerweise Intel SGX, AMD SEV oder ARM TrustZone und ihre Version, bestätigt und dokumentiert, welcher Programmcode AC darin ausgeführt wird.

Erfindungsgemäß erfolgt der Runtime-Test der vertrauenswürdigen Ausführungsumgebung TEE, indem der Strom von Eingangsdaten ID, welcher die operative Daten OD zur Datenverarbeitung mittels des Programmcodes AC enthält, um Testdaten TD ergänzt wird. Die Testdaten TD sind beispielsweise zufällig generiert. Die Testdaten TD können in weiteren Ausführungsbeispielen alternativ auch fest vorgegeben sein oder adaptiv abhängig von den operativen Daten OD ermittelt werden.

Die Testdaten TD werden im dargestellten Ausführungsbeispiel abschnittsweise wechselnd (also gewissermaßen "interleaved") mit den operativen Daten OD übertragen. In weiteren, nicht eigens dargestellten Ausführungsbeispielen, welche im Übrigen dem dargestellten Ausführungsbeispiel entsprechen, können die Testdaten TD auf andere Weise mit den operativen Daten OD zusammengefügt werden, beispielsweise mittels Faltung oder Überlagerung. Das dargestellte Ausführungsbeispiel und die weiteren Ausführungsbeispiele haben den Vorteil, dass der in der vertrauenswürdigen Ausführungsumgebung TEE ausgeführte Programmcode AC nicht eindeutig erkennen kann, welcher Teil der Eingangsdaten ID operative Daten OD bildet und welcher Teil der Eingangsdaten ID Testdaten TD bildet. Insbesondere ist es dadurch erschwert, die vertrauenswürdige Ausführungsumgebung, insbesondere den Programmcode AC, gezielt zu manipulieren.

Die vertrauenswürdige Ausführungsumgebung TEE verarbeitet mittels des Programmcodes AC die Eingangsdaten ID mit den operativen Daten OD und den Testdaten TD zu verarbeiteten Daten PD.

Die verarbeiteten Daten PD werden als Ausgangsdaten OUD von der vertrauenswürdigen Ausführungsumgebung TEE ausgegeben. Die Ausgangsdaten OUD enthalten somit verarbeitete operative Daten POD und verarbeitete Testdaten PTD. Die verarbeiteten Testdaten PTD werden mittels einer Testdatenüberprüfungseinheit TDV überprüft. Abhängig von der Überprüfung werden die verarbeiteten operativen Daten POD bereitgestellt oder modifiziert bereitgestellt, indem diese als "nicht vertrauenswürdig" gekennzeichnet werden oder die verarbeiteten operativen Daten POD werden blockiert oder durch Ersatzdaten ersetzt.

Die verarbeiteten Testdaten PTD werden beispielsweise inhaltlich überprüft, etwa durch Prüfen auf eine Übereinstimmung der verarbeiteten Testdaten PTD mit einem erwarteten Referenzdatum RD. In weiteren, nicht eigens dargestellten Ausführungsbeispielen werden zusätzlich Seitenkanaleffekte, insbesondere elektromagnetische Abstrahlung und Stromverbrauch sowie Speicherzugriffe und Buszugriffe der vertrauenswürdigen Ausführungsumgebung TEE erfasst und auf Plausibilität überprüft, indem verglichen wird, ob die Seitenkanaleffekte ein den Testdaten TD entsprechendes Muster aufweisen.

Das Hinzufügen von Testdaten TD zum Strom operativer Daten OD und das Prüfen der bearbeiteten Testdaten PTD erfolgt außerhalb der vertrauenswürdigen Ausführungsumgebung TEE, in der der vorhergehend erwähnte überwachte Programmcode AC ausgeführt wird. Dies erfolgt im dargestellten Ausführungsbeispiel in einer offenen Ausführungsumgebung der Datenverarbeitungsanlage D, kann in weiteren, nicht eigens dargestellten Ausführungsbeispielen aber auch in einer weiteren vertrauenswürdigen Ausführungsumgebung erfolgen. Solche weiteren vertrauenswürdigen Ausführungsumgebungen sind beispielsweise auf einem Prozessorbaustein realisiert, auf welchem auch die vorhergehend beschriebene vertrauenswürdige Ausführungsumgebung TEE realisiert ist oder auf einem separaten weiteren Prozessorbaustein oder auf einem Prozessorbaustein eines fremden Hosts.

Die Testdaten TD werden im dargestellten Ausführungsbeispiel mittels eines Testdatengenerators TDG generiert und mittels eines Testdaten-Interleavers TDI mit den operativen Daten OD zusammengefügt, also gewissermaßen "verwoben", um die Eingangsdaten ID für die vertrauenswürdige Ausführungsumgebung TEE zu bilden.

Die von der vertrauenswürdigen Ausführungsumgebung TEE ausgegebenen Ausgangsdaten OUD werden von einem Testdaten-De-Interleaver TDDI wieder separiert, um einen Datenstrom von verarbeiteten Testdaten PTD und einen weiteren Datenstrom von verarbeiteten operativen Daten POD zu bilden. Die verarbeiteten Testdaten PTD werden von der Testdatenüberprüfungseinheit TDV anhand von Referenzdaten RD überprüft, indem die verarbeiteten Testdaten PTD mit den Referenzdaten RD verglichen werden.

Ergibt der Vergleich, dass die verarbeiteten Testdaten PTD mit den Referenzdaten RD übereinstimmen, so werden die verarbeiteten operativen Daten POD als integer betrachtet und die verarbeiteten operative Daten POD von einer Ausgabedaten-Schaltvorrichtung ODS als vertrauenswürdig verarbeitete operative Daten TPOD ausgegeben.

Die Testdaten TD und die zugeordneten Referenzdaten RD können im dargestellten Ausführungsbeispiel fest vorgegeben sein. Vorzugsweise werden die Testdaten TD jedoch dynamisch, beispielsweise zufällig oder pseudozufällig generiert. In diesem Fall stellt der Testdatengenerator TDG neben den Testdaten TD auch die Referenzdaten RD zur Überprüfung bereit und übermittelt diese mittels eines Kommunikationskanals K an die Testdatenüberprüfungseinrichtung TDV.

Die Art des Zusammenfügens, d. h. des Verwebens, von Testdaten TD und operativen Daten OD kann fest vorgegeben sein. So können beispielsweise Zeitintervalle vorgegeben werden, in welchen Testdaten TD als Eingangsdaten ID übermittelt werden, während in anderen Zeitintervallen operative Daten OD als Eingangsdaten ID übermittelt werden. Grundsätzlich können Testdaten auch dynamisch in den Strom von Eingangsdaten ID eingefügt werden, beispielsweise zufällig oder pseudozufällig. In diesem Fall stellt der Testdatengenerator TDG zusätzlich zu den inhaltlichen Testdaten TD auch eine Information TDDIK bereit, wie die Testdaten mit den operativen Daten zu verknüpfen sind. Diese Information TDDIK wird vom Testdaten-Interleaver TDI und vom Testdaten-De-Interleaver TDDI verwendet. Diese flexible, dynamische Art des Verknüpfens von operativen Daten OD und Testdaten TD hat den Vorteil, dass Fehler oder Backdoors einer vertrauenswürdigen Ausführungsumgebung TEE oder eines darin ausgeführten Ausführungscodes AC leicht erkannt werden können, da eine systematisch fehlerhafte oder manipulierte Realisierung nicht gezielt auf eine bestimmte Art des Interleavings, d.h. auf eine bestimmte Art der Verknüpfung der Testdaten TD mit den operativen Daten OD, abgestellt werden kann.

In einer weiteren Ausgestaltung kann anstelle des Verknüpfens oder Verwebens von Testdaten TD und operativen Daten OD im Testdaten-Interleaver TDI auch eine Auswahl einer Teilmenge von operativen Daten erfolgen, die als Menge von Testdaten TD dienen soll: Eine Eingangsdatenauswahleinrichtung wählt aus den operativen Daten eine Teilmenge als Testdaten TD aus, und berechnet daraus die Referenzdaten RD, indem dieselben Rechenoperationen darauf angewendet werden, die auch in der vertrauenswürdigen Ausführungsumgebung TEE angewendet werden. Der Teil der operativen Daten, der keine Testdaten TD bildet, bildet einen neuen Satz operativer Daten OD im Sinne der vorliegenden Erfindung. Diese Auswahl von Testdaten TD kann nach fest vorgegebenen Regeln erfolgen oder auch dynamisch, z.B. zufällig, erfolgen. Die Information, welche Daten als Testdaten TD ausgewählt wurden, wird an eine Ausgangsdatenauswahleinrichtung übergeben, die aus den Ausgangsdaten OUD die den Testdaten TD zugehörigen verarbeiteten Testdaten PTD auswählt. Der Vergleich der verarbeiteten Testdaten PTD mit den Referenzdaten RD erfolgt wie oben beschrieben.

Die vorhergehend beschriebene Datenverarbeitungsanlage D mit der vertrauenswürdigen Ausführungsumgebung TEE ist Teil einer erfindungsgemäßen Fertigungsanlage A, die in der vertrauenswürdigen Ausführungsumgebung TEE vertrauliche Fertigungspläne verarbeitet, welche zur Fertigung von Werkstücken ausgeführt werden. In weiteren, nicht eigens dargestellten Ausführungsbeispielen ist die Datenverarbeitungsanlage D Teil einer Bearbeitungslage, die in der vertrauenswürdigen Ausführungsumgebung TEE vertrauliche Bearbeitungspläne zur Bearbeitung von Werkstücken verarbeitet.

## Patentansprüche

1. Verfahren zur Integritätsbestimmung einer Datenverarbeitung operativer Daten mittels einer vertrauenswürdigen Ausführungsumgebung (TEE), bei welchem der vertrauenswürdigen Ausführungsumgebung (TEE) Eingangsdaten (ID) übergeben werden, die die operativen Daten (OD) und Testdaten (TD) aufweisen, wobei die Eingangsdaten (ID) mittels der Datenverarbeitung zu Ausgangsdaten (OUD) verarbeitet werden und wobei derjenige Teil der Ausgangsdaten (OUD), den die verarbeiteten Testdaten (PTD) bilden, mit Referenzdaten (RD) einem Vergleich (TDV) unterzogen wird und abhängig von dem Vergleich (TDV) die Integrität der Datenverarbeitung bestimmt wird.

2. Verfahren nach dem vorhergehenden Anspruch, bei welchem dann, wenn die Referenzdaten (RD) mit den verarbeiteten Testdaten (PTD) übereinstimmen, die Integrität der Datenverarbeitung festgestellt wird und vorzugsweise mittels einer Nutzerschnittstelle (TPOD) angezeigt wird.

3. Verfahren nach einem der vorhergehenden Ansprüche, bei welchem die Datenverarbeitung verschlüsselt erfolgt.

4. Verfahren nach einem der vorhergehenden Ansprüche, bei welchem die operativen Daten (OD) und die Testdaten (TD) nach einer vorgegebenen Abfolge oder Ordnung zu Eingangsdaten (ID) zusammengefügt werden.

5. Verfahren nach einem der vorhergehenden Ansprüche, bei welchem die operativen Daten (OD) und die Testdaten (TD) zufällig und/oder pseudozufällig zu einer Abfolge oder Ordnung zu Eingangsdaten (ID) zusammengefügt werden.

6. Verfahren nach den Ansprüchen 3 oder 4, bei welchem die verarbeiteten Testdaten (PTD) anhand der Abfolge oder Ordnung aus den Ausgangsdaten (OUD) extrahiert werden.

7. Verfahren nach einem der vorhergehenden Ansprüche, bei welchem die Testdaten (TD) einen Teil der Eingangsdaten (ID) bilden, welcher der Datenverarbeitung mittels der vertrauenswürdigen Ausführungsumgebung (TEE) nicht bedarf.

8. Vorrichtung, insbesondere Computerprogrammprodukt, welche ausgebildet ist, ein Verfahren nach einem der vorhergehenden Ansprüche auszuführen.

9. Datenverarbeitungsanlage mit einer Vorrichtung nach dem vorhergehenden Anspruch.

10. Anlage, insbesondere Fertigungs- und/oder Bearbeitungsanlage und/oder autonomes Fahrzeug und/oder Medizingerät, vorzugsweise modalitätsgerät, mit einer Datenverarbeitungsanlage nach dem vorhergehenden Anspruch und/oder einem Computerprogrammprodukt nach Anspruch 8.
